# EUROPÄISCHE PATENTSCHRIFT

(11) **EP 4 559 663 B1**
(45) Veröffentlichungstag und Bekanntmachung des Hinweises auf die Patenterteilung: **08.07.2026**
(21) Anmeldenummer: 24184368.9
(22) Anmeldetag: 25.06.2024
(51) Int. Cl.: B29C 57/10, B29C 61/02, B29C 61/06, H01R 4/72, H02G 15/18

(54) **SCHRUMPFKAPPE UND VERFAHREN ZUM HERSTELLEN EINER SCHRUMPFKAPPE**
SHRINK CAP AND METHOD FOR PRODUCING A SHRINK CAP
CAPUCHON RÉTRACTABLE ET PROCÉDÉ DE FABRICATION D'UN CAPUCHON RÉTRACTABLE

(30) Priorität: 24.11.2023 DE 102023132807
(43) Veröffentlichungstag der Anmeldung: 28.05.2025
(73) Patentinhaber: Hofsaess, Marcel P., 99707 Kyffhäuserland Ortsteil Steintahleben (DE)
(72) Erfinder: Hofsaess, Marcel P., 99707 Kyffhäuserland Ortsteil Steintahleben (DE)
(74) Vertreter: Witte, Weller & Partner Patentanwälte mbB

(56) Entgegenhaltungen:
- EP-B1- 0 857 562
- EP-B1- 1 983 539
- DE-A1- 1 956 628

## Beschreibung

Die vorliegende Erfindung betrifft eine Schrumpfkappe sowie ein Verfahren zum Herstellen einer Schrumpfkappe. Die vorliegende Erfindung betrifft darüber hinaus einen temperaturabhängigen Schalter mit einer aufgeschrumpften erfindungsgemäßen Schrumpfkappe.

Eine gattungsgemäße Schrumpfkappe und ein gattungsgemäßes Verfahren zur Herstellung einer solchen Schrumpfkappe ist aus der EP 0 857 562 B1 bekannt.

In der EP 1 983 539 B1, welche die Grundlage für die Oberbegriffe der Ansprüche 1 und 15 bildet, ist ferner ein Temperaturbegrenzer offenbart mit einer Vorderseite, an die eine Oberseite und eine Unterseite sowie zwei Schmalseiten anschließen, wobei der Temperaturbegrenzer einen Körper aufweist, der der von einer elektrisch isolierenden Hülle umschlossen ist, die aus einem Schlauchabschnitt gebildet ist, der an einem Ende gefaltet und stoffschlüssig verschlossen ist. Das verschlossene Ende des Schlauchabschnitts bedeckt eine Vorderseite des Körpers. Hierbei ist vorgesehen, dass die Hülle von den Schmalseiten her mit Abschnitten, von der Oberseite her und von der Unterseite mit Abschnitten her so gegen die Vorderseite des Körpers gefaltet ist, dass diese lückenlos bedeckt ist.

Die DE 1 956 628 A1 offenbart ferner ein Verfahren zur Herstellung von Loetverbindungen an Stirnverbindungen großer Wechselstrommaschinen.

Schrumpfkappen werden typischerweise als Schüttgut bereitgehalten und auf zu schützende elektrische Bauteile, wie z.B. temperaturabhängige Schalter, aufgeschoben und dann durch den Einsatz von Heißluft aufgeschrumpft, so dass eine Ummantelung entsteht, durch die das Bauteil vor Schmutz, Feuchtigkeit sowie elektrischem Kontakt mit anderen Bauteilen geschützt wird. Aus dieser Ummantelung ragen dann die Anschlusselemente des Bauteils hervor, die häufig als Anschlusslitzen oder Kabel ausgebildet sind.

Solche Schrumpfkappen werden für gewöhnlich dadurch hergestellt, dass zunächst von einem Schrumpfschlauch Schrumpfschlauchabschnitte abgelängt werden und dann an einem ihrer beiden Enden eine Schweiß- oder Prägenaht erzeugt wird. Hierzu wird der Schrumpfschlauchabschnitt an dem genannten Ende zusammengedrückt und bspw. mit Hilfe zweier Schweißstempel, die von gegenüberliegenden Seiten aus auf das Ende des Schrumpfschlauchabschnitts mittels Druck und Hitze und einwirken, die Schweiß- oder Prägenaht erzeugt.

Da die Schweiß- oder Prägenaht durch Zusammendrücken eines Schrumpfschlauchendes und Fügen der dadurch aufeinandergedrückten Schrumpfschlauch-Längshälften erzeugt wird, hat die Schweiß- oder Prägenaht typischerweise in etwa die doppelte Wandstärke des übrigen Schrumpfschlauches. Dadurch entsteht eine vergleichsweise steife und starre Schweiß- oder Prägenaht.

Die Schweiß- oder Prägenaht steht von einer geschlossenen Stirnseite, welche durch die Schweiß- oder Prägenaht an dem Schrumpfschlauch bzw. der Schrumpfkappe erzeugt wird, ab. Fertigungsbedingt ergibt sich entlang des freien, abstehenden Endes des Schweiß- oder Prägenaht ein meist sehr scharfkantiger Rand. Dieser scharfkantige Rand bleibt beim Aufschrumpfen der Schrumpfkappen auf die zu schützenden Bauteile erhalten.

Sowohl bei der Konfektionierung der Bauteile mit den Schrumpfkappen als auch bei der Weiterverarbeitung der mit den Schrumpfkappen versehenen Bauteile erfolgen viele Verfahrensschritte typischerweise von Hand, wobei die diese Verfahrensschritte durchführenden Personen sehr feinmotorische Arbeiten durchführen müssen, so dass diese keine Schutzhandschuhe tragen können.

Wegen der scharfkantigen Ränder der Schweiß- oder Prägenahten kommt es deshalb bei dieser Art von Handarbeiten immer wieder zu Verletzungen der Personen, was selbstverständlich einen großen Nachteil darstellt.

Um diese Verletzungen zu vermeiden, greifen die Personen daher die ummantelten Bauteile häufig nicht an der Schrumpfkappe selbst, sondern an den Anschlussleitungen, was bei den weiter erforderlichen Manipulationen jedoch häufig dazu führt, dass die Verbindung zwischen der Anschlussleitung und dem ummantelten Bauteil geschwächt oder gar ganz zerstört wird, so dass das aus solchen Bauteilen gefertigte Gerät häufig Fehlfunktionen aufweist.

Insbesondere dann, wenn die Bauteile temperaturabhängige Schalter sind, die z.B. eine Spule vor Erhitzung schützen sollen, werden die mit den Schrumpfkappen ummantelten Schalter unmittelbar in Anlage mit der Spule z.B. von Elektromotoren gebracht. Die Schalter werden elektrisch zu der Spule in Reihe geschaltet und unterbrechen den Stromkreis, wenn die Temperatur der Spule einen vorgegebenen Wert übersteigt. Hierzu ist im Inneren des temperaturabhängigen Schalters in an sich bekannter Weise ein Bimetall-Schaltwerk angeordnet.

Damit diese Schutzfunktion sicher erfüllt werden kann, ist es erforderlich, den Schalter im Inneren der Spule anzuordnen oder zumindest sehr dicht an die Spule heranzubringen. Der scharfkantige Rand der Schrumpfkappe kann dabei auch zu Schäden an der Spule führen, was selbstverständlich ebenso nachteilhaft ist.

Gemäß der EP 0 857 562 B1 werden die zuvor genannten Probleme dadurch gelöst, dass die Schrumpfkappe nach dem Erzeugen der Schweiß- oder Prägenaht nochmals nachbehandelt wird. Bei dieser Nachbehandlung wird die Schweiß- oder Prägenaht mit Hilfe eines Formstempels umgebogen. Durch dieses Umbiegen wird das scharfkantige, freie Ende der Schweiß- oder Prägenaht sozusagen eingerollt oder eingeklappt, damit dieses nicht mehr stirnseitig nach vorne in gerader Weise von der Schrumpfkappe absteht.

Durch diese Maßnahme lassen sich die oben genannten Probleme einer Verletzungsgefahr von Personen und einer Beschädigungsgefahr anderer Bauteile wirksam verhindern.

Es besteht dennoch weiterhin Verbesserungspotential in der Herstellung derartiger Schrumpfkappen. Beispielsweise hat es sich gezeigt, dass Schrumpfkappen, deren Schweiß- oder Prägenahten derart um 90° oder mehr umgebogen sind, wie es in der EP 0 857 562 B1 beschrieben ist, mechanisch instabiler werden und dadurch leichter abbrechen können. Dies wiederum kann zu offenen Stellen in der Schrumpfkappe führen, wodurch die Schutzfunktion der Schrumpfkappe grundsätzlich verlorengehen kann. Zudem kann dadurch die Spannungs- bzw. Hochspannungsfestigkeit der Schrumpfkappe, welche insbesondere bei der Verwendung an temperaturabhängigen Schaltern eine wichtige Eigenschaft ist, die durch die Schrumpfkappe gewährleistet sein muss, beeinträchtigt werden.

Es ist daher eine Aufgabe der vorliegenden Erfindung eine Schrumpfkappe sowie ein Verfahren zur Herstellung einer solchen Schrumpfkappe bereitzustellen, mit der bzw. dem sich die oben genannten Probleme ausräumen oder zumindest verringern lassen. Dabei ist es insbesondere eine Aufgabe die Gefahr der Beschädigung oder Verletzung, welche durch solche Schrumpfkappen ausgehen kann, zu verringern und gleichzeitig eine mechanisch stabile, dichte und hochspannungsfeste Schrumpfkappe zu gewährleisten.

Diese Aufgabe wird erfindungsgemäß durch eine Schrumpfkappe zum Aufschieben auf einen temperaturabhängigen Schalter gelöst, wobei die Schrumpfkappe ein offenes erstes Ende zum Aufschieben auf den Schalter und ein verschlossenes zweites Ende aufweist, das durch eine Schweiß- oder Prägenaht verschlossen ist, welche sich ausgehend von einer im Bereich des zweiten Endes angeordneten, geschlossenen Stirnseite, die sich durch die Schweiß- oder Prägenaht ergibt, erstreckt, wobei die Schrumpfkappe in einem Bereich zwischen dem ersten Ende und der Stirnseite im Wesentlichen spiegelsymmetrisch zu einer ersten Symmetrieebene ist, und wobei die Schweiß- oder Prägenaht an ihrem an die Stirnseite angrenzenden Endabschnitt parallel versetzt zu der ersten Symmetrieebene angeordnet ist und ein Teilabschnitt der Schweiß- oder Prägenaht umgebogen ist.

Gemäß einem weiteren Aspekt der vorliegenden Erfindung wird die oben genannte Aufgabe durch ein Verfahren zum Herstellen einer Schrumpfkappe gelöst, mit den Schritten:
a) Bereitstellen eines Schrumpfschlauchabschnitts, der an seinem ersten Ende eine erste Öffnung und an seinem zweiten Ende eine zweite Öffnung aufweist und im Wesentlichen spiegelsymmetrisch zu einer ersten Symmetrieebene ist,
b) Zusammendrücken des Schrumpfschlauchabschnitts an seinem zweiten Ende und Erzeugen einer Schweiß- oder Prägenaht, um die zweite Öffnung zu verschließen und im Bereich des zweiten Endes eine an die Schweiß- oder Prägenaht angrenzende, geschlossene Stirnseite zu erzeugen, wobei die Schweiß- oder Prägenaht parallel versetzt zu der ersten Symmetrieebene erzeugt wird,
c) Umformen eines Teilabschnitts der Schweiß- oder Prägenaht derart, dass zumindest ein Teilabschnitt der Schweiß- oder Prägenaht umgebogen wird.

Die Schweiß- oder Prägenaht wird also mit anderen Worten nicht mittig in der ersten Symmetrieebene des Schrumpfschlauchabschnitts, aus dem die Schrumpfkappe hergestellt wird, erzeugt, sondern außermittig versetzt zu dieser ersten Symmetrieebene.

Dies hat den Vorteil, dass die Schweiß- oder Prägenaht relativ großflächig ausgestaltet sein kann und dennoch nach dem Umformen nicht über die Ränder der Schrumpfkappe absteht. Die Schweiß- oder Prägenaht wird vorzugsweise nicht gefaltet oder eingerollt, sondern lediglich in eine Richtung umgebogen. Aufgrund des Versatzes der Schweißoder Prägenaht ist vergleichsweise viel Raum vorhanden, in den die Schweiß- oder Prägenaht hineingebogen werden kann. Ist die Schweiß- oder Prägenaht beispielsweise nach oben aus der ersten Symmetrieebene heraus parallel versetzt an der Stirnseite angebracht, so ist unterhalb der Schweiß- oder Prägenaht vergleichsweise viel Raum vorhanden, in den die Schweiß- oder Prägenaht hineingebogen werden kann.

Auch wenn die Schweiß- oder Prägenaht exakt um 90° umgebogen wird und länger als die Hälfte der Höhe der Schrumpfkappe ist, steht sie dann dennoch nicht seitlich, also in einer Richtung quer zu der ersten Symmetrieebene, von der Schrumpfkappe ab. Insbesondere das freie, meist scharfkantige Ende der Schweiß- oder Prägenaht steht somit seitlich nicht von der Schrumpfkappe ab. Auch in nachträgliches Abschneiden bzw. Kürzen der Schweiß- oder Prägenaht kann dadurch entfallen.

All dies lässt sich durch die außermittige bzw. versetzte Anordnung der Schweiß- oder Prägenaht auch dann ermöglichen, wenn die Schweiß- oder Prägenaht relativ großflächig ausgestaltet ist. Eine großflächige Ausgestaltung der Schweiß- oder Prägenaht vergrößert die Dichtigkeit der Fügestelle und erleichtert das Handling beim Erzeugen der Schweißoder Prägenaht.

Die oben genannte Aufgabe ist somit vollständig gelöst.

Gemäß einer Ausgestaltung ist eine Fügefläche der Schweiß- oder Prägenaht in dem an die Stirnseite angrenzenden Endabschnitt der Schweiß- oder Prägenaht parallel versetzt zu der ersten Symmetrieebene.

Mit der "Fügefläche" ist hier die Fläche gemeint, entlang der die beiden Schrumpfschlauch-Längshälften, welche beim Erzeugen der Schweiß- oder Prägenaht aufeinandergedrückt und miteinander gefügt werden, verbunden sind.

Diese Fügefläche oder Fügeebene verläuft nach dem Erzeugen der Schweiß- oder Prägenaht gesamthaft parallel versetzt zu der ersten Symmetrieebene. Da dann jedoch erfindungsgemäß ein Teilabschnitt der Schweiß- oder Prägenaht umgeformt wird, bezieht sich die zuvor genannte Definition der parallel versetzten Anordnung der Fügefläche "nur" auf den an die Stirnseite angrenzenden bzw. den an der Stirnseite angeordneten Endabschnitt der Schweiß- oder Prägenaht.

Gemäß einer weiteren Ausgestaltung definiert die Fügefläche im Inneren der Schrumpfkappe eine Grenzlinie, die bogenförmig gekrümmt ist.

Bei dieser Grenzlinie handelt es sich um den Beginn der Fügefläche, der von innen, also durch die erste Öffnung hindurch betrachtet, sichtbar ist.

Gemäß einer weiteren Ausgestaltung hat die Stirnseite eine orthogonal zu der ersten Symmetrieebene gemessene Höhe, wobei die Schweiß- oder Prägenaht an ihrem an die Stirnseite angrenzenden Endabschnitt um mindestens 1/10 der Höhe, vorzugsweise mindestens 1/5 der Höhe, parallel versetzt zu der ersten Symmetrieebene angeordnet ist.

Besonders bevorzugt ist eine orthogonal zu der ersten Symmetrieebene gemessene Höhe der Schweiß- oder Prägenaht, welche von dem an die Stirnseite angrenzenden Endabschnitt der Schweiß- oder Prägenaht bis zu einem freien Ende der Schweiß- oder Prägenaht gemessen wird, größer als die Hälfte der Höhe der Stirnseite.

Damit ist es möglich, dass die Schweiß- oder Prägenaht in ihrem umgeformten Endzustand eine orthogonal zu der ersten Symmetrieebene gemessene Höhe hat, welche größer als die Hälfte der Höhe der Stirnseite ist und dabei dennoch nicht über die Stirnseite hinaus seitlich absteht.

Gemäß einer weiteren Ausgestaltung ist die Schweiß- oder Prägenaht derart umgeformt, dass ein umgeformter Teilabschnitt der Schweiß- oder Prägenaht unmittelbar oder unter Zwischenlage eines Fügemittels an der Stirnseite anliegt.

Anders als es in der EP 0 857 562 B1 vorgeschlagen ist, ist die Schweiß- oder Prägenaht somit nicht nur auf die Stirnseite der Schrumpfkappe zu um 90° oder mehr umgebogen, eingeklappt oder eingerollt, sondern derart umgeformt, dass diese zumindest teilweise an der Stirnseite anlegt. Vorzugsweise wird die Schweiß- oder Prägenaht um ca. 90° umgeklappt und derart an die Stirnseite der Schrumpfkappe angelegt, dass zumindest ein Teilabschnitt der Schweiß- oder Prägenaht unmittelbar oder mittelbar unter Zwischenlage eines Fügemittels an der Stirnseite der Schrumpfkappe anliegt.

Dies hat mehrere Vorteile: Zum einen wird die Schrumpfkappe und damit auch das Bauteil (z.B. der temperaturabhängige Schalter), auf das die Schrumpfkappe aufgebracht wird, weiterhin verkürzt. Diese geringere Baugröße ist sowohl in Bezug auf die Schüttgut-Lagerhaltung der Schrumpfkappe als auch in Bezug auf das Handling und die Einbaumöglichkeiten der Schrumpfkappe von Vorteil. Zum anderen hat sich gezeigt, dass durch das Anlegen der Schweiß- oder Prägenaht an die Stirnseite der Schrumpfkappe die Verletzungs- und Beschädigungsgefahr weiter verringert wird, da der scharfkantige Rand der Schweiß- oder Prägenaht vollständig an die Stirnseite der Schrumpfkappe angelegt werden kann, so dass diese von der Schrumpfkappe gar nicht mehr absteht und damit kaum mehr zugänglich ist. Des Weiteren hat sich gezeigt, dass dadurch eine Art Doppel- bzw. Mehrwandigkeit an der Stirnseite der Schrumpfkappe entsteht, da die daran anliegende Schweiß- oder Prägenaht die Wandstärke an der Stirnseite der Schrumpfkappe zusätzlich vergrößert. Dies wiederum erzeugt nicht nur weitere mechanische Stabilität. Erste Versuche der Anmelderin haben auch gezeigt, dass hierdurch die Hochspannungsfestigkeit der Schrumpfkappe enorm verbessert werden kann. Während herkömmliche Schrumpfkappen eine Hochspannungsfestigkeit im Bereich von 1,5-2,5 kV zeigen, kann mit der erfindungsgemäßen Schrumpfkappe eine Hochspannungsfestigkeit von 3,5 kV oder mehr realisiert werden.

Gemäß einer Ausgestaltung weist die Schweiß- oder Prägenaht ein freies Ende sowie einen an die Stirnseite angrenzenden Endabschnitt auf, wobei sich der an der Stirnseite unmittelbar oder mittelbar unter Zwischenlage eines Fügemittels anliegende, umgeformte Teilabschnitt der Schweiß- oder Prägenaht über einen Bereich zwischen dem freien Ende und dem an die Stirnseite angrenzenden Endabschnitt erstreckt.

Die Schweiß- oder Prägenaht liegt also vorzugsweise zumindest mit einem mittleren Teilabschnitt, der sich zwischen dem freien Ende und dem an die Stirnseite angrenzenden Endabschnitt erstreckt, an der Stirnseite der Schrumpfkappe an.

Gemäß einer weiteren Ausgestaltung ist es bevorzugt, dass mehr als 50% der Fläche einer an der Stirnseite anliegenden Seite der Schweiß- oder Prägenaht an der Stirnseite unmittelbar oder mittelbar unter Zwischenlage eines Fügemittels anliegt.

Mit anderen Worten ist es bevorzugt, dass ein Großteil der Schweiß- oder Prägenaht an der Stirnseite der Schrumpfkappe anliegt. Hierdurch wird die mechanische Stabilität und die Hochspannungsfestigkeit der Schrumpfkappe weiter verbessert.

Besonders bevorzugt liegt die Schweiß- oder Prägenaht vollständig an der Stirnseite, unmittelbar oder mittelbar unter Zwischenlage eines Fügemittels, an.

Die Schweiß- oder Prägenaht wird hierzu vorzugsweise um 90° umgebogen und mit einer Seite gesamthaft an die Stirnseite der Schrumpfkappe angelegt. Vorzugsweise steht die Schweiß- oder Prägenaht dabei auch nicht über den äußeren Rand oder Umfang der Schrumpfkappe ab. Auf diese Weise ist für die größtmögliche mechanische Stabilität und Hochspannungsfestigkeit gesorgt. Gleichzeitig ist die Verletzungsgefahr und Beschädigungsgefahr, die von der Schrumpfkappe ausgeht, auf ein Minimum reduziert.

Gemäß einer weiteren Ausgestaltung ist der umgeformte Teilabschnitt der Schweiß- oder Prägenaht an die Stirnseite angepresst.

Hierdurch ergibt sich vorzugsweise eine nahtlose, im Wesentlichen faltenfreie, an die Stirnseite der Schrumpfkappe angelegte Schweiß- oder Prägenaht. Vorzugsweise wird der Teilabschnitt oder die gesamte Schweiß- oder Prägenaht durch Erhitzen, sei es durch Heißluft von außen und/oder einen heißen Formstempel, warm- bzw. heißumgeformt und dann an die Stirnseite der Schrumpfkappe angepresst. Hierdurch entsteht eine sehr kompakte Schrumpfkappe, die insbesondere in ihrem Bereich der Stirnseite eine hohe Stabilität und Hochspannungsfestigkeit aufweist.

Gemäß einer weiteren Ausgestaltung ist der umgeformte Teilabschnitt der Schweiß- oder Prägenaht stoffschlüssig an der Stirnseite befestigt.

Beispielsweise wird die Schweiß- oder Prägenaht nach deren Erzeugen und Umformen mit dem umgeformten Teilabschnitt an der Stirnseite der Schrumpfkappe angeklebt oder angeschweißt. Hierdurch wird sichergestellt, dass der umgeformte Teilabschnitt der Schweiß- oder Prägenaht dauerhaft an der Stirnseite anliegen bleibt, da er nochmals zusätzlich an dieser befestigt ist.

Gemäß einer weiteren Ausgestaltung ist die Stirnseite der Schrumpfkappe konvex gewölbt. Besonders bevorzugt ist die Stirnseite in einem Längsschnitt der Schrumpfkappe betrachtet bogenförmig ausgestaltet.

Hierdurch wird die Verletzungs- und Beschädigungsgefahr, die von der Schrumpfkappe ausgeht, zusätzlich minimiert. Zudem ist diese Form insbesondere für die Aufnahme von meist zylindrisch bzw. rund ausgestalteten temperaturabhängigen Schaltern besonders geeignet.

Gemäß einer weiteren Ausgestaltung verläuft der umgeformte Teilabschnitt der Schweißoder Prägenaht annähernd parallel zu der bogenförmig konvex gewölbten Stirnseite.

Der umgeformte Teilabschnitt der Schweiß- oder Prägenaht schmiegt sich dadurch also quasi wie eine zweite Wand an die Stirnseite der Schrumpfkappe an. Auch hierdurch wird die Kompaktheit, mechanische Stabilität, Hochspannungsfestigkeit und Steifigkeit der Schrumpfkappe nochmals verbessert.

Wie erwähnt, beziehen sich die oben genannten und die in den Ansprüchen definierten Ausgestaltungen nicht nur auf die Schrumpfkappe selbst, sondern auch auf einen temperaturabhängigen Schalter mit einer solchen aufgeschrumpften Schrumpfkappe. Ebenso beziehen sich diese Ausgestaltungen auch auf das erfindungsgemäße Verfahren zum Herstellen der Schrumpfkappe. Damit ergeben sich insbesondere die folgenden weiteren Ausgestaltungen für das erfindungsgemäße Herstellungsverfahren:

Gemäß einer Ausgestaltung wird die Schweiß- oder Prägenaht in Schritt b) derart versetzt zu der ersten Symmetrieebene des Schrumpfschlauchabschnitts erzeugt, dass die in Schritt b) erzeugte Schweiß- oder Prägenaht im Wesentlichen spiegelsymmetrisch zu einer zweiten Symmetrieebene ist, die parallel versetzt zu der ersten Symmetrieebene ist.

Gemäß einer weiteren Ausgestaltung wird die Schweiß- oder Prägenaht in Schritt b) derart versetzt zu der ersten Symmetrieebene des Schrumpfschlauchabschnitts erzeugt, dass die in Schritt b) erzeugte Schweiß- oder Prägenaht im Wesentlichen spiegelsymmetrisch zu einer zweiten Symmetrieebene ist, die um mindestens 1/10 einer orthogonal zu der ersten Symmetrieebene gemessenen Höhe, vorzugsweise mindestens 1/5 der Höhe, versetzt zu der ersten Symmetrieebene ist.

Gemäß einer weiteren Ausgestaltung wird der Teilabschnitt der Schweiß- oder Prägenaht in Schritt c) derart umgeformt, dass der umgeformte Teilabschnitt der Schweiß- oder Prägenaht unmittelbar oder unter Zwischenlage eines Fügemittels an der Stirnseite anliegt.

Gemäß einer weiteren Ausgestaltung weist die Schweiß- oder Prägenaht ein freies Ende sowie ein an die Stirnseite angrenzendes Ende auf, wobei sich der an der Stirnseite unmittelbar oder unter Zwischenlage eines Fügemittels anliegende, umgeformte Teilabschnitt der Schweiß- oder Prägenaht über einen Bereich zwischen dem freien Ende und dem an die Stirnseite angrenzenden Ende erstreckt.

Gemäß einer weiteren Ausgestaltung wird der Teilabschnitt der Schweiß- oder Prägenaht in Schritt c) derart umgeformt, dass mehr als 50% der Fläche einer an der Stirnseite anliegenden Seite der Schweiß- oder Prägenaht an der Stirnseite unmittelbar oder unter Zwischenlage eines Fügemittels anliegt.

Gemäß einer weiteren Ausgestaltung wird der Teilabschnitt der Schweiß- oder Prägenaht in Schritt c) derart umgeformt, dass die Schweiß- oder Prägenaht vollständig an der Stirnseite, unmittelbar oder unter Zwischenlage eines Fügemittels, anliegt.

Gemäß einer weiteren Ausgestaltung wird der Teilabschnitt der Schweiß- oder Prägenaht in Schritt c) oder nach dem Schritt c) an die Stirnseite angepresst.

Gemäß einer weiteren Ausgestaltung wird der Teilabschnitt der Schweiß- oder Prägenaht in Schritt c) oder nach dem Schritt c) stoffschlüssig an der Stirnseite befestigt.

Gemäß einer weiteren Ausgestaltung ist die Stirnseite konvex gewölbt.

Gemäß einer weiteren Ausgestaltung wird der Teilabschnitt der Schweiß- oder Prägenaht in Schritt c) derart umgeformt, dass der umgeformte Teilabschnitt annähernd parallel zu der bogenförmig konvex gewölbten Stirnseite verläuft.

Gemäß einer weiteren Ausgestaltung wird die Schweiß- oder Prägenaht in Schritt c) derart umgeformt, dass ein freies Ende der Schweiß- oder Prägenaht in einer Richtung orthogonal zu der ersten Symmetrieebene nicht über die Stirnseite absteht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmend er vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung eines Zwischenzustands während der Herstellung einer erfindungsgemäßen Schrumpfkappe in mehreren Ansichten;
- Fig. 2A: eine Seitenansicht einer Schrumpfkappe gemäß einem ersten Ausführungsbeispiel der vorliegenden Erfindung;
- Fig. 2B: eine Schnittansicht der in Fig. 2A gezeigten Schrumpfkappe;
- Fig. 3A: eine Seitenansicht einer Schrumpfkappe gemäß einem zweiten Ausführungsbeispiel der vorliegenden Erfindung;
- Fig. 3B: eine Schnittansicht der in Fig. 3A gezeigten Schrumpfkappe;
- Fig. 4: mehrere schematisch angedeutete Verfahrensschritte zur Herstellung der erfindungsgemäßen Schrumpfkappe.

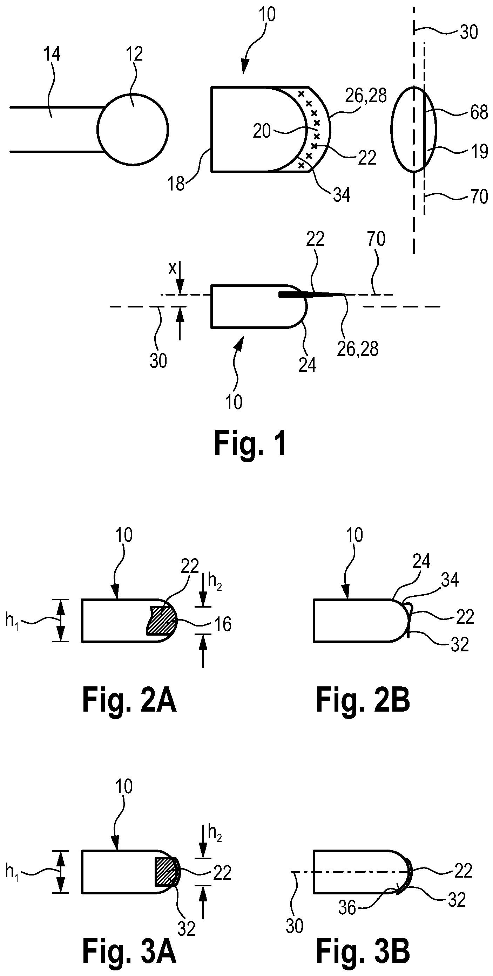

Fig. 1 zeigt einen Zwischenzustand, der bei der Herstellung der erfindungsgemäßen Schrumpfkappe erreicht wird, in verschiedenen schematischen Darstellungen. Die Schrumpfkappe ist darin gesamthaft mit der Bezugsziffer 10 bezeichnet.

Die Schrumpfkappe 10 dient insbesondere zur Aufnahme eines temperaturabhängigen Schalters 12, dessen Außenanschlüsse 14 hier vereinfacht als Anschlusslitzen gezeigt sind. Derartige temperaturabhängige Schalter 12 dienen zur Überwachung elektrischer Geräte. Sie dienen insbesondere dazu, das zu überwachende elektrische Gerät im Falle einer Überhitzung stromlos zu schalten. Hierzu weist der Schalter 12 ein in der Regel im Inneren des Schalter-Gehäuses verbautes, temperaturabhängiges Schaltwerk auf, das ein Bimetallteil umfasst. Dieses Bimetallteil ändert beim Überschreiten einer Ansprechtemperatur seine Form, wodurch das Schaltwerk aus seiner geschlossenen Stellung in seine geöffnete Stellung gebracht wird. Der Stromkreis, in dem der Schalter 12 verbaut ist, ist dann geöffnet. Kühlt anschließend das zu überwachende Gerät wieder unter eine sog. Rücksprungtemperatur des Bimetallteils ab, so springt dieses wiederum in seine Ausgangsstellung zurück, wodurch der Schalter wieder in seine geschlossene Stellung gebracht wird. Auf diese Weise ist ein temperaturabhängiges Schaltverhalten des Schalters 12 realisiert.

Die erfindungsgemäße Schrumpfkappe 10 dient insbesondere dem äußeren Schutz sowie der elektrischen Abschirmung des Schalters 12. Die Schrumpfkappe 10 wird über den Schalter 12 gestülpt und an diesem angebracht bzw. auf diesen aufgeschrumpft, so dass die Schrumpfkappe 10 den Schalter 12 im Endzustand allseitig umhüllt.

Es versteht sich jedoch, dass die erfindungsgemäße Schrumpfkappe 10 grundsätzlich auch zur Aufnahme anderer Bauteile geeignet ist und nicht auf die Aufnahme eines temperaturabhängigen Schalters, wie dies vorliegend gezeigt ist, beschränkt ist.

Die Schrumpfkappe 10, deren Profil im Querschnitt bei 16 gezeigt ist, wird mit ihrem ersten Ende 18 auf den Schalter 12 aufgeschoben und dann durch Einsatz heißer Luft aufgeschrumpft, so dass aus der so gebildeten Ummantelung nur noch die Außenanschlüsse 14 herausragen. Das erste Ende 18 ist daher als offenes Ende ausgestaltet, welches eine erste Öffnung 19 aufweist.

Das dem ersten Ende 18 gegenüberliegende zweite Ende 20 der Schrumpfkappe 10 ist verschlossen. Hier weist die Schrumpfkappe 10 eine im Bereich des zweiten Endes 20 ausgebildete Schweiß- oder Prägenaht 22 auf. Durch diese Schweiß- oder Prägenaht 22 wird die Schrumpfkappe 10 im Bereich ihres zweiten Endes 20 vollständig verschlossen. Aufgrund der Schweiß- oder Prägenaht 22 weist die Schrumpfkappe 10 im Bereich ihres zweiten Endes 20 eine geschlossene Stirnseite 24 auf, welche an die Schweiß- oder Prägenaht 22 angrenzt.

Herstellungsbedingt ist die Schweiß- oder Prägenaht 22 als Falz oder Kante ausgebildet, der bzw. die von der Stirnseite 24 der Schrumpfkappe 10 gerade absteht. Dieser Falz bzw. diese Kante ist vergleichsweise biegesteif oder starr und weist an ihrem vorderen, stirnseitigen, freien Ende 26 einen relativ scharfen Rand 28 auf.

Fig. 1 zeigt den Zustand der Schrumpfkappe 10 nach dem Erzeugen der Schweiß- oder Prägenaht 22 (noch vor dem Umformen der Schweiß- oder Prägenaht 22). In diesem Zustand ist die Schrumpfkappe 10 in einem Bereich zwischen dem ersten Ende 18 und dem zweiten Ende 20 im Wesentlichen spiegelsymmetrisch zu einer ersten Symmetrieebene 30. Vorzugsweise ist die Schrumpfkappe 10, ausgenommen die Schweiß- oder Prägenaht 22, im Wesentlichen spiegelsymmetrisch zu dieser ersten Symmetrieebene 30. Das Wort "im Wesentlichen spiegelsymmetrisch" wird vorliegend verwendet, um anzudeuten, dass in der Praxis typischerweise keine absolut exakte Spiegelsymmetrie besteht. Grundsätzlich ist diese Spiegelsymmetrie jedoch vorhanden und die herstellungsbedingten, in der Praxis auftretenden, kleineren Abweichungen, welche typischerweise im Millimeter- oder Zehntelbereich sind, lassen sich vernachlässigen.

Die Schrumpfkappe 10 ist jedoch nicht gesamthaft im Wesentlichen spiegelsymmetrisch zu der ersten Symmetrieebene 30. Die Schweiß- oder Prägenaht 22 ist parallel versetzt zu dieser ersten Symmetrieebene 30 angeordnet. Genauer gesagt, ist die Schweiß- oder Prägenaht 22 in ihrem in Fig. 1 gezeigten Zustand im Wesentlichen spiegelsymmetrisch zu einer zweiten Symmetrieebene 70, die parallel und beabstandet zu der ersten ersten Symmetrieebene 30 ist.

Die Schweiß- oder Prägenaht 22 wird also mit anderen Worten nicht mittig an der Schrumpfkappe 10 erzeugt, sondern höhenversetzt zu der Symmetrieebene 30.

In Fig. 1 rechts gezeigt ist eine Draufsicht von vorne auf die Schrumpfkappe 10 durch die erste Öffnung 19 hindurch. Darin ist die Schweiß- oder Prägenaht 22 als eine parallel zu der ersten Symmetrieebene 30 versetzte Linie ersichtlich. Diese Linie ergibt sich durch die Fügefläche 68, entlang der die beiden Schrumpfschlauch-Längshälften, welche beim Erzeugen der Schweiß- oder Prägenaht 22 aufeinandergedrückt und miteinander gefügt werden, verbunden sind. Diese Fügefläche 68 verläuft beim Erzeugen der Schweiß- oder Prägenaht 22 gesamthaft parallel versetzt zu der ersten Symmetrieebene 30. Die Fügefläche 68 liegt in der zweiten Symmetrieebene 70, zu der die Schweiß- oder Prägenaht 22 im Wesentlichen spiegelsymmetrisch ist und die parallel versetzt zu der ersten Symmetrieebene 30 ist.

Der stirnseitige, freie, vordere Rand 28 der Schweiß- oder Prägenaht 22 ist in der Draufsicht von oben bogenförmig gekrümmt (siehe mittlerer oberer Teil der Fig. 1). Dies ist herstellungsbedingt, da die Schrumpfkappe 10, wie nachfolgend im Detail erläutert ist, zur Herstellung der Schweiß- oder Prägenaht 22 im Bereich ihres zweiten Endes 20 durch Zusammendrücken und anschließendes Verschweißen oder Verprägen eines zunächst noch offenen Endabschnitts (einer Öffnung 21) eines zylinderförmigen Schrumpfschlauchs hergestellt wird.

Bei 16 ist die Schrumpfkappe 10 im Querschnitt oval bzw. elliptisch dargestellt. Die Schrumpfkappe 10 kann im Querschnitt betrachtet jedoch auch annähernd rund sein. Das für die Schrumpfkappe 10 verwendete Ausgangsmaterial in Form eines Schrumpfschlauchs ist typischerweise im Querschnitt rund bzw. kreisförmig, also insgesamt kreiszylindrisch ausgestaltet.

Die sich durch die Schweiß- oder Prägenaht 22 ergebende Stirnseite 24 der Schrumpfkappe 10 ist konvex ausgebildet, so wie dies insbesondere aus der Draufsicht von oben im mittleren oberen Teil der Fig. 1 sowie aus der Seitenansicht im unteren Teil der Fig. 1 ersichtlich ist. Es versteht sich, dass die hier gezeigte Form der Stirnseite 24 schematisiert dargestellt ist. In der Praxis ist diese Stirnseite 24 zwar meist bogenförmig konvex ausgestaltet, jedoch typischerweise nicht exakt so rund und regelmäßig, wie sie in den vorliegenden Figuren gezeigt ist. Herstellungsbedingt ergibt sich jedoch, wie erwähnt, eine derartige bogenförmige Rundung bzw. Wölbung der Stirnseite 24. Je nach Form des Schalters 12, auf dem die Schrumpfkappe 10 aufgeschrumpft werden soll, kann die Stirnseite 24 jedoch auch eckig oder annähernd plan geformt sein und die Schweiß- oder Prägenaht 22 entlang einer geraden Linie verlaufen. Eine runde bzw. bogenförmige Schweißoder Prägenaht 22 ist jedoch für die Aufnahme eines meist runden Schalters 12 vorteilhaft.

Schrumpfkappen bergen, wenn sie in dem in Fig. 1 gezeigten Zustand verwendet und nicht weiterverarbeitet werden, aufgrund des relativ scharfen Randes 28 am stirnseitigen Ende 26 der Schweiß- oder Prägenaht 22 ein vergleichsweise großes Verletzungsrisiko für Menschen und Beschädigungsrisiko für Teile der Maschinen, in denen die temperaturabhängigen Schalter 12 mitsamt ihren Schrumpfkappen 10 verbaut werden.

Erfindungsgemäß wird die Schrumpfkappe 10 daher ausgehend von dem in Fig. 1 gezeigten Zwischenzustand weiterverarbeitet. Hierbei kann die Schweiß- oder Prägenaht 22 derart umgeformt werden, dass zumindest ein umgeformter Teilabschnitt 32 der Schweißoder Prägenaht 22 an der Stirnseite 24 der Schrumpfkappe 10 anliegt. Die Schweiß- oder Prägenaht 22 kann mit anderen Worten also um ca. 90° oder etwas mehr umgebogen und zumindest abschnittsweise an die Stirnseite 24 angelegt werden. Der an die Stirnseite 24 der Schrumpfkappe 10 angelegte, umgeformte Teilabschnitt 32 der Schweiß- oder Prägenaht 22 kann entweder unmittelbar oder mittelbar unter Zwischenlage eines Fügemittels an der Stirnseite 24 anliegen. Grundsätzlich ist ein Anlegen an die Stirnseite 24 zwar vorteilhaft, erfindungsgemäß jedoch nicht zwingend notwendig. Die Schweiß- oder Prägenaht 22 kann beispielsweise auch "nur" um 90° umgebogen werden, ohne sie an die Stirnseite 24 der Schrumpfkappe 10 anzulegen (d.h. ohne Berührung mit der Stirnseite 24 der Schrumpfkappe 10).

Wird die Schweiß- oder Prägenaht 22 ausgehend von dem in Fig. 1 gezeigten Zwischenzustand um 90° umgebogen und/oder teilweise oder gesamthaft an die Stirnseite 24 angelegt, so steht der scharfe Rand 28 der Schweiß- oder Prägenaht 22 aufgrund der nach oben versetzten Schweiß- oder Prägenaht 22 seitlich bzw. nach unten nicht mehr von der Schrumpfkappe 10 hervor (siehe Fig. 5A und 5B). Eine weitere Nachbearbeitung, z.B. ein Kürzen der Schweiß- oder Prägenaht ist nicht mehr erforderlich. Die Verletzungs- oder Beschädigungsgefahr ist auf ein Minimum reduziert.

In Fig. 2A, 2B, 3A und 3B, sind zwei verschiedene Ausführungsbeispiele der erfindungsgemäßen Schrumpfkappe 10 in ihrem fertig verarbeiteten Endzustand gezeigt. Fig. 2A und 3A zeigen die Schrumpfkappen 10 jeweils in einer Seitenansicht. Fig. 2B und 3B zeigen die Schrumpfkappen 10 jeweils in einer Längsschnittansicht. Die Schnittebene ist dabei jeweils senkrecht zu der in Fig. 1 gestrichelt angedeuteten ersten Symmetrieebene 30.

In dem in Fig. 2A und 2B gezeigten ersten Ausführungsbeispiel ist die Schweiß- oder Prägenaht 22 umgeklappt und abschnittsweise an der Stirnseite 24 der Schrumpfkappe 10 angeklebt. Im Bereich des an die Stirnseite 24 angrenzenden Endabschnitts 34 der Schweiß- oder Prägenaht 22 kann sich durch das Umklappen der Schweiß- oder Prägenaht 22 eine kleinere Wulst ergeben, die nach vorne von der Stirnseite 24 leicht absteht. Insgesamt wird die Schrumpfkappe 10 durch das Umklappen und Anlegen der Schweißoder Prägenaht 22 an die Stirnseite 24 in ihrer effektiven Länge jedoch deutlich verkürzt. Zudem steht der scharfe Rand 28 der Schweiß- oder Prägenaht 22 nicht mehr nach vorne hin stirnseitig von der Schrumpfkappe 10 ab. Das Verletzungs- und Beschädigungsrisiko ist somit deutlich verringert. Ebenso ergibt sich im Bereich der umgeklappten Schweißoder Prägenaht 22 eine verbesserte Hochspannungsfestigkeit der Schrumpfkappe 10, da die Schweiß- oder Prägenaht 22 in diesem Teilabschnitt 32 sozusagen eine weitere Schicht erzeugt, durch die die Wandstärke und damit auch die Hochspannungsfestigkeit der Schrumpfkappe vergrößert wird.

In dem in Fig. 3A und 3B gezeigten zweiten Ausführungsbeispiel ist die Schweiß- oder Prägenaht 22 nahezu vollständig oder zumindest mit einem größeren Teilabschnitt als gemäß dem zweiten Ausführungsbeispiel (vgl. Fig. 2A und 2B) an die Stirnseite 24 der Schrumpfkappe angelegt. Vorzugsweise ist die Schweiß- oder Prägenaht 22 an die Stirnseite 24 angepresst. Hierdurch ergibt sich vorzugsweise eine nahtlose, im Wesentlichen faltenfreie, an die Stirnseite 24 der Schrumpfkappe 10 angelegte Schweiß- oder Prägenaht 22. Die beschriebene Art der Umformung der Schweiß- oder Prägenaht 22 erfolgt, wie nachfolgend im Detail erläutert ist, vorzugsweise unter Hitzeeinwirkung.

Je nach Anwendungszweck kann es bevorzugt sein, den an die Stirnseite 24 angelegten Teilabschnitt 32 der Schweiß- oder Prägenaht 22 lose an die Stirnseite anzulegen oder mit dieser durch einen zusätzlichen Schweiß- oder Klebevorgang stoffschlüssig zu verbinden.

Besonders bevorzugt liegt der umgeformte Teilabschnitt 32 der Schweiß- oder Prägenaht 22 gemäß dem in Fig. 3A und 3B gezeigten zweiten Ausführungsbeispiel zumindest größtenteils (also mit mehr als 50 % der Fläche), der auf die Stirnseite 24 umgeklappten Unterseite 36 an der Stirnseite 24 an.

Grundsätzlich muss die Schweiß- oder Prägenaht 22 jedoch nicht zwangsläufig an der Stirnseite 24 anliegen, sondern kann auch um 90° oder weniger nach unten gebogen sein, ohne die Stirnseite 24 zu berühren.

Der an die Stirnseite 24 angrenzende Endabschnitt 34 der Schweiß- oder Prägenaht 22 ist vorzugsweise um mindestens 1/10 der Höhe h₁, weiterhin vorzugsweise um mindestens 1/5 der Höhe h₁, besonders bevorzugt um mehr als 1/3 der Höhe h₁ zu der ersten Symmetrieebene 30 versetzt. Mit der genannten Höhe h₁ ist die orthogonal zu der ersten Symmetrieebene 30 gemessene Abmessung der Schrumpfkappe 10 im Bereich des ersten Endes 18 gemeint. Der genannte Versatz ist Fig. 1 mit dem Bezugszeichen x angedeutet.

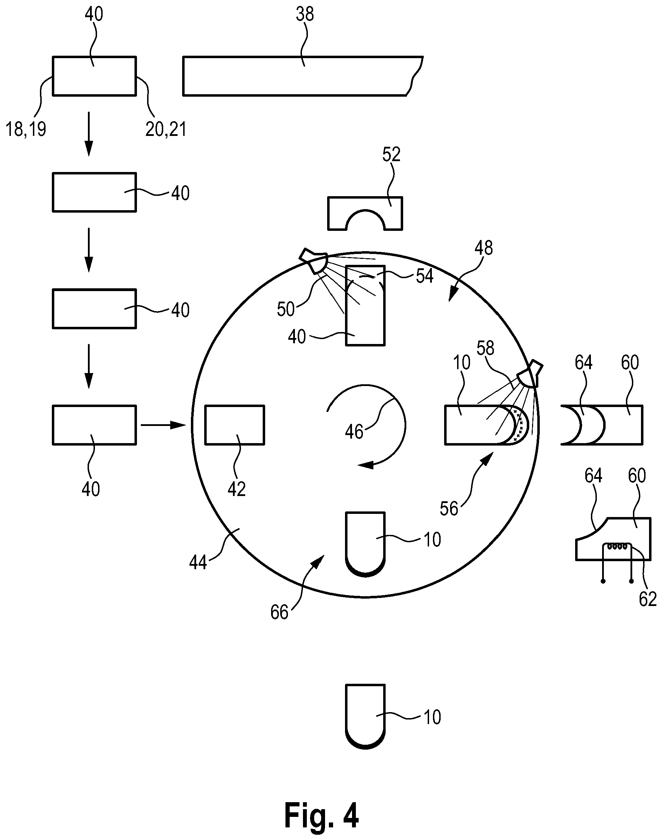

In Fig. 4 ist schematisch ein Verfahren dargestellt, mit dem die erfindungsgemäße Schrumpfkappe 10 aus einem Schrumpfschlauch 38 hergestellt werden kann.

Zunächst werden von dem Schrumpfschlauch 38 kurze Schrumpfschlauchabschnitte 40 mit gegenüberliegenden, noch offenen Enden 18, 20, welche jeweils eine Öffnung 19, 21 aufweisen, abgeschnitten. Diese Schrumpfschlauchabschnitte 40 werden dann nacheinander auf ein Profil 42 aufgeschoben, das auf einem Drehteller 44 sitzt.

Nach dem Aufschieben auf das Profil 42 wird der Drehteller 44 in Richtung des in Fig. 4 angedeuteten Pfeils 46 (hier im Uhrzeigersinn) um 90° verdreht, so dass der jeweilige Schrumpfschlauchabschnitt 40 in eine Schweißposition 48 gelangt.

An der Schweißposition 48 wird der Schrumpfschlauchabschnitt 40 durch bei 50 angedeutete Heißluft erhitzt und vorverformt, wobei gleichzeitig zwei Schweißstempel 52 auf das zweite Ende 20 des Schrumpfschlauchabschnitts 40 einwirken. Hierbei wird die zweite Öffnung 21 des Schrumpfschlauchabschnitts 40 verschlossen und die Schweiß- oder Prägenaht 22 erzeugt.

Einer dieser beiden Schweißstempel 52 ist in Fig. 4 schematisch angedeutet. Bei 54 ist ferner noch gezeigt, wo der Schweißstempel 52 an dem Schrumpfschlauchabschnitt 40 angreift. In der Regel kommen die Schweißstempel 52 von oben und von unten und pressen dabei das Schrumpfschlauchende zusammen, wobei durch die Erhitzung eine Schweiß- oder Prägenaht 22, wie in Fig. 1 oder 4 gezeigt, ausgebildet wird.

Die Schrumpfkappe 10 weist nun also den Zwischenzustand auf, der in Fig. 1 gezeigt ist.

Der Drehteller 44 wird jetzt um weitere 90° in Richtung des Pfeils 46 verdreht, so dass die Schrumpfkappe 10 in eine Umformposition 56 gelangt. Hierbei wird die Schweiß- oder Prägenaht 22 vorzugsweise erneut mittels Heißluft 58 erhitzt, um diese leichter umformbar zu machen. Gleichzeitig wird von vorne ein Form- oder Pressstempel 60 gegen die Schweiß- oder Prägenaht 22 gedrückt, um diese umzubiegen und, wenn gewünscht, an die Stirnseite 24 der Schrumpfkappe 10 anzulegen bzw. anzupressen.

Der Form- bzw. Pressstempel 60 ist in Fig. 4 rechts sowohl in Draufsicht als auch in Seitenansicht schematisch gezeigt, wobei die Seitenansicht eine Heizung 62 aufweist, die statt der Heißluft 58 verwendet werden kann, um die Schweiß- oder Prägenaht 22 vor dem Verformen oder bei dem Verformen zielgenau zu erhitzen.

Der Form- bzw. Pressstempel 60 weist einen Formbereich 64 mit einer bogenförmigen Flanke auf und ist vorzugsweise an die Rundung der Stirnseite 24 der Schrumpfkappe 10 angepasst.

Wie bereits erwähnt, kann die Schweiß- oder Prägenaht 22 in diesem Verfahrensschritt zusätzlich stoffschlüssig mit der Stirnseite 24 verbunden werden, also diese zusätzlich angeschweißt oder angeklebt werden.

Abschließend dreht sich der Drehteller 44 noch einmal um 90° in Richtung des Pfeils 46, so dass die fertig hergestellte Schrumpfkappe 10 in die Ausstoßposition 66 gelangt und bspw. mittels Druckluft ausgestoßen wird. Die so hergestellte Schrumpfkappe 10 kann dann bspw. als Schüttgut auf Lager gehalten werden, bis sie zur Ummantelung eines temperaturabhängigen Schalters verwendet wird.

Es versteht sich, dass die vorliegenden Zeichnungen die Schrumpfkappe 10 sowie deren Herstellung lediglich schematisch andeuten, und dass diverse weitere geometrische oder herstellungstechnische Modifikationen vorgenommen werden können, ohne den Rahmen der vorliegenden Erfindung, wie er durch die beigefügten Ansprüche definiert wird, zu verlassen.

## Patentansprüche

1. Schrumpfkappe (10) zum Aufschieben auf einen temperaturabhängigen Schalter (12), mit einem offenen ersten Ende (18) zum Aufschieben auf den Schalter (12) und einem verschlossenen zweiten Ende (20), das durch eine Schweiß- oder Prägenaht (22) verschlossen ist, welche sich ausgehend von einer im Bereich des zweiten Endes (20) angeordneten, geschlossenen Stirnseite (24), die sich durch die Schweiß- oder Prägenaht (22) ergibt, erstreckt, wobei die Schrumpfkappe (10) in einem Bereich zwischen dem ersten Ende (18) und der Stirnseite (24) im Wesentlichen spiegelsymmetrisch zu einer ersten Symmetrieebene (30) ist,
**dadurch gekennzeichnet, dass** die Schweiß- oder Prägenaht (22) an ihrem an die Stirnseite (24) angrenzenden Endabschnitt (34) parallel versetzt zu der ersten Symmetrieebene (30) angeordnet ist und ein Teilabschnitt (32) der Schweiß- oder Prägenaht (22) umgebogen ist.

2. Schrumpfkappe nach Anspruch 1, wobei eine Fügefläche (68) der Schweiß- oder Prägenaht (22) in dem an die Stirnseite angrenzenden Endabschnitt (34) der Schweiß- oder Prägenaht (22) parallel versetzt zu der ersten Symmetrieebene (30) ist.

3. Schrumpfkappe nach Anspruch 2, wobei die Fügefläche (68) im Inneren der Schrumpfkappe (10) eine Grenzlinie definiert, die bogenförmig gekrümmt ist.

4. Schrumpfkappe nach einem der Ansprüche 1-3, wobei die Stirnseite (24) eine orthogonal zu der ersten Symmetrieebene (30) gemessene Höhe (h₁) hat, und wobei die Schweiß- oder Prägenaht (22) an ihrem an die Stirnseite (24) angrenzenden Endabschnitt (34) um mindestens 1/10 der Höhe (h₁), vorzugsweise mindestens 1/5 der Höhe (h₁), parallel versetzt zu der ersten Symmetrieebene (30) angeordnet ist.

5. Schrumpfkappe nach Anspruch 4, wobei eine orthogonal zu der ersten Symmetrieebene (30) gemessene Höhe (h₂) der Schweiß- oder Prägenaht (22), welche von dem an die Stirnseite (24) angrenzenden Endabschnitt (34) der Schweiß- oder Prägenaht (22) bis zu einem freien Ende (26) der Schweiß- oder Prägenaht (22) gemessen wird, größer als die Hälfte der Höhe (h₁) der Stirnseite (24) ist.

6. Schrumpfkappe nach einem der Ansprüche 1-5, wobei die Schweiß- oder Prägenaht (22) derart umgeformt ist, dass ein umgeformter Teilabschnitt (32) der Schweiß- oder Prägenaht (22) unmittelbar oder unter Zwischenlage eines Fügemittels an der Stirnseite (24) anliegt.

7. Schrumpfkappe (10) nach Anspruch 6, wobei ein freies Ende (26) der Schweißoder Prägenaht (22) in einer orthogonal zu der ersten Symmetrieebene (30) verlaufenden Richtung nicht seitlich von der Schrumpfkappe (10) absteht.

8. Schrumpfkappe nach Anspruch 6, wobei die Schweiß- oder Prägenaht (22) ein freies Ende (26) aufweist, wobei sich der an der Stirnseite (24) unmittelbar oder unter Zwischenlage eines Fügemittels anliegende, umgeformte Teilabschnitt (32) der Schweiß- oder Prägenaht (22) über einen Bereich zwischen dem freien Ende (26) und dem an die Stirnseite (24) angrenzenden Endabschnitt (34) erstreckt.

9. Schrumpfkappe nach einem der Ansprüche 6 bis 8, wobei mehr als 50% der Fläche einer an der Stirnseite (24) anliegenden Seite (36) der Schweiß- oder Prägenaht (22) an der Stirnseite (24) unmittelbar oder unter Zwischenlage eines Fügemittels anliegt, oder wobei die Schweiß- oder Prägenaht (22) vollständig an der Stirnseite (24), unmittelbar oder unter Zwischenlage eines Fügemittels, anliegt.

10. Schrumpfkappe nach einem der Ansprüche 6-9, wobei der umgeformte Teilabschnitt (32) der Schweiß- oder Prägenaht (22) an die Stirnseite (24) angepresst ist.

11. Schrumpfkappe nach einem der Ansprüche 6-10, wobei der umgeformte Teilabschnitt (32) der Schweiß- oder Prägenaht (22) stoffschlüssig an der Stirnseite (24) befestigt ist.

12. Schrumpfkappe nach einem der Ansprüche 1-11, wobei die Stirnseite (24) konvex gewölbt ist.

13. Schrumpfkappe nach Anspruch 6 und 12, wobei der umgeformte Teilabschnitt (32) der Schweiß- oder Prägenaht (22) annähernd parallel zu der konvex gewölbten Stirnseite (24) verläuft.

14. Temperaturabhängiger Schalter mit einer aufgeschrumpften Schrumpfkappe gemäß einem der Ansprüche 1-13.

15. Verfahren zum Herstellen einer Schrumpfkappe (10), mit den Schritten:
a) Bereitstellen eines Schrumpfschlauchabschnitts (40), der an seinem ersten Ende (18) eine erste Öffnung (19) und an seinem zweiten Ende (20) eine zweite Öffnung (21) aufweist und im Wesentlichen spiegelsymmetrisch zu einer ersten Symmetrieebene (30) ist,
b) Zusammendrücken des Schrumpfschlauchabschnitts (40) an seinem zweiten Ende (20) und Erzeugen einer Schweiß- oder Prägenaht (22), um die zweite Öffnung (21) zu verschließen und im Bereich des zweiten Endes (20) eine geschlossene Stirnseite (24) zu erzeugen,
**dadurch gekennzeichnet, dass** die Schweiß- oder Prägenaht (22) parallel versetzt zu der ersten Symmetrieebene (30) erzeugt wird, und das Verfahren ferner folgenden Schritt aufweist:
c) Umformen eines Teilabschnitts (32) der Schweiß- oder Prägenaht (22) derart, dass der umgeformte Teilabschnitt (32) der Schweiß- oder Prägenaht (22) umgebogen wird.

## Claims

1. A shrink cap (10) for sliding onto a temperature-dependent switch (12), having an open first end (18) for sliding onto the switch (12) and a closed second end (20) which is closed by a welded or embossed seam (22) that extends from a closed end face (24) arranged in an area of the second end (20) and resulting from the welded or embossed seam (22), wherein the shrink cap (10) is substantially mirror-symmetrical with respect to a first plane of symmetry (30) in an area between the first end (18) and the end face (24),
**characterized in that** the welded or embossed seam (22) is arranged parallel offset to the first plane of symmetry (30) at an end portion (34) adjacent to the end face (24), and a section (32) of the welded or embossed seam (22) is bent.

2. The shrink cap as claimed in claim 1, wherein a joining surface (68) of the welded or embossed seam (22) in the end portion (34) of the welded or embossed seam (22) adjacent to the end face is offset parallel to the first plane of symmetry (30).

3. The shrink cap as claimed in claim 2, wherein the joining surface (68) in the interior of the shrink cap (10) defines a boundary line that is curved in an arc.

4. The shrink cap as claimed in one of claims 1-3, wherein the end face (24) has a height (h₁) measured orthogonally to the first plane of symmetry (30), and wherein the welded or embossed seam (22) is arranged at its end portion (34) adjacent to the end face (24) offset parallel to the first plane of symmetry (30) by at least 1/10 of the height (h₁), preferably at least 1/5 of the height (h₁).

5. The shrink cap as claimed in claim 4, wherein a height (h₂) of the welded or embossed seam (22) measured orthogonally to the first plane of symmetry (30), which height is measured from the end portion (34) of the welded or embossed seam (22) adjacent to the end face (24) to a free end (26) of the welded or embossed seam (22), is larger than half the height (h₁) of the end face (24).

6. The shrink cap as claimed in one of claims 1-5, wherein the welded or embossed seam (22) is formed in such a way that a formed section (32) of the welded or embossed seam (22) bears against the end face (24) directly or with an interposed joining agent.

7. The shrink cap as claimed in claim 6, wherein a free end (26) of the welded or embossed seam (22) does not protrude laterally from the shrink cap (10) in a direction orthogonally to the first plane of symmetry (30).

8. The shrink cap as claimed in claim 6, wherein the welded or embossed seam (22) comprises a free end (26), wherein the formed section (32) of the welded or embossed seam (22), which bears against the end face (24) directly or with the interposed joining agent, extends over an area between the free end (26) and the end portion (34) adjoining the end face (24).

9. The shrink cap as claimed in one of claims 6 to 8, wherein more than 50% of the area of one side (36) of the welded or embossed seam (22) bearing against the end face (24) bears against the end face (24) directly or with the interposed joining agent, or wherein the welded or embossed seam (22) bears completely against the end face (24), directly or with the interposed joining agent.

10. The shrink cap as claimed in one of claims 6-9, wherein the formed section (32) of the welded or embossed seam (22) is pressed against the end face (24).

11. The shrink cap as claimed in one of claims 6-10, wherein the formed section (32) of the welded or embossed seam (22) is fixed to the end face (24) in a materiallocking manner.

12. The shrink cap as claimed in one of claims 1-11, wherein the end face (24) is convexly curved.

13. The shrink cap as claimed in claims 6 and 12, wherein the formed section (32) of the welded or embossed seam (22) extends approximately parallel to the convexly curved end face (24).

14. A temperature-dependent switch having a shrunk-on shrink cap according to one of claims 1-13.

15. A method of manufacturing a shrink cap (10), having the steps of:
a) providing a heat-shrink tube section (40) comprising a first opening (19) at its first end (18) and a second opening (21) at its second end (20) and being substantially mirror-symmetrical with respect to a first plane of symmetry (30),
b) pressing the heat-shrink tube section (40) together at its second end (20) and producing a welded or embossed seam (22) to close the second opening (21) and create a closed end face (24) in an area of the second end (20),
**characterized in that** the welded or embossed seam (22) is produced parallel offset to the first plane of symmetry (30), and **in that** the method further comprises the following step:
c) forming a section (32) of the welded or embossed seam (22) such that the formed section (32) of the welded or embossed seam (22) is bent.

## Revendications

1. Capuchon rétractable (10) destiné à être enfilé sur un commutateur (12) dépendant de la température, comportant une première extrémité (18) ouverte destinée à être enfilée sur le commutateur (12) et une seconde extrémité (20) fermée qui est fermée par un cordon de soudure ou d'estampage (22) et s'étend à partir d'un côté frontal (24) fermé disposé dans la zone de la seconde extrémité (20) et qui résulte du cordon de soudure ou d'estampage (22), dans lequel le capuchon rétractable (10) est en symétrie sensiblement spéculaire par rapport à un premier plan de symétrie (30) dans une zone entre la première extrémité (18) et le côté frontal (24),
**caractérisé en ce que** le cordon de soudure ou d'estampage (22) est disposé de manière décalée parallèlement au premier plan de symétrie (30) au niveau de sa section d'extrémité (34) adjacente au côté frontal (24) et une section partielle (32) du cordon de soudure ou d'estampage (22) est repliée.

2. Capuchon rétractable selon la revendication 1, dans lequel une surface d'assemblage (68) du cordon de soudure ou d'estampage (22) est disposée de manière décalée parallèlement au premier plan de symétrie (30) dans la section d'extrémité (34) du cordon de soudure ou d'estampage (22) adjacente au côté frontal.

3. Capuchon rétractable selon la revendication 2, dans lequel la surface d'assemblage (68) définit une ligne limite à l'intérieur du capuchon rétractable (10) qui est incurvée en forme d'arc.

4. Capuchon rétractable selon l'une des revendications 1 à 3, dans lequel le côté frontal (24) présente une hauteur (h₁) mesurée orthogonalement au premier plan de symétrie (30), et dans lequel le cordon de soudure ou d'estampage (22) est disposé de manière décalée parallèlement au premier plan de symétrie (30) d'au moins 1/10 de la hauteur (h₁), de préférence d'au moins 1/5 de la hauteur (h₁), au niveau de sa section d'extrémité (34) adjacente au côté frontal (24).

5. Capuchon rétractable selon la revendication 4, dans lequel une hauteur (h₂) du cordon de soudure ou d'estampage (22), mesurée orthogonalement au premier plan de symétrie (30), qui est mesurée depuis la section d'extrémité (34) du cordon de soudure ou d'estampage (22) adjacente au côté frontal (24) jusqu'à une extrémité libre (26) du cordon de soudure ou d'estampage (22), est supérieure à la moitié de la hauteur (h₁) du côté frontal (24).

6. Capuchon rétractable selon l'une des revendications 1 à 5, dans lequel le cordon de soudure ou d'estampage (22) est déformé de telle sorte qu'une section partielle (32) déformée du cordon de soudure ou d'estampage (22) s'applique, directement ou avec interposition d'un moyen d'assemblage, contre le côté frontal (24).

7. Capuchon rétractable (10) selon la revendication 6, dans lequel une extrémité libre (26) du cordon de soudure ou d'estampage (22) ne fait pas saillie latéralement depuis le capuchon rétractable (10) dans une direction s'étendant de manière orthogonale au premier plan de symétrie (30).

8. Capuchon rétractable selon la revendication 6, dans lequel le cordon de soudure ou d'estampage (22) présente une extrémité libre (26), dans lequel la section partielle (32) déformée du cordon de soudure ou d'estampage (22) qui s'applique, directement ou avec interposition d'un moyen d'assemblage, contre le côté frontal (24) s'étend sur une zone entre l'extrémité libre (26) et la section d'extrémité (34) adjacente au côté frontal (24).

9. Capuchon rétractable selon l'une des revendications 6 à 8, dans lequel plus de 50 % de la surface d'un côté (36) du cordon de soudure ou d'estampage (22) qui s'applique contre le côté frontal (24) s'applique, directement ou avec interposition d'un moyen d'assemblage, contre le côté frontal (24), ou dans lequel le cordon de soudure ou d'estampage (22) s'applique complètement, directement ou avec interposition d'un moyen d'assemblage, contre le côté frontal (24).

10. Capuchon rétractable selon l'une des revendications 6 à 9, dans lequel la section partielle (32) déformée du cordon de soudure ou d'estampage (22) est pressée contre le côté frontal (24).

11. Capuchon rétractable selon l'une des revendications 6 à 10, dans lequel la section partielle (32) déformée du cordon de soudure ou d'estampage (22) est fixée par liaison de matière au côté frontal (24).

12. Capuchon rétractable selon l'une des revendications 1 à 11, dans lequel le côté frontal (24) est bombé de manière convexe.

13. Capuchon rétractable selon les revendications 6 et 12, dans lequel la section partielle (32) déformée du cordon de soudure ou d'estampage (22) s'étend approximativement de manière parallèle au côté frontal (24) bombé de manière convexe.

14. Commutateur sensible à la température comportant un capuchon rétractable rétracté selon l'une des revendications 1 à 13.

15. Procédé de fabrication d'un capuchon rétractable (10), comportant les étapes consistant à :
a) fournir une section formant gaine rétractable (40) qui présente une première ouverture (19) au niveau de sa première extrémité (18) et une seconde ouverture (21) au niveau de sa seconde extrémité (20) et qui est en symétrie sensiblement spéculaire par rapport à un premier plan de symétrie (30),
b) comprimer la section formant gaine rétractable (40) au niveau de sa seconde extrémité (20) et réaliser un cordon de soudure ou d'estampage (22) afin de fermer la seconde ouverture (21) et de réaliser un côté frontal (24) fermé dans la zone de la seconde extrémité (20),
**caractérisé en ce que** le cordon de soudure ou d'estampage (22) est réalisé de manière décalée parallèlement au premier plan de symétrie (30), et le procédé présente en outre l'étape suivante :
c) déformation d'une section partielle (32) du cordon de soudure ou d'estampage (22) de telle sorte que la section partielle (32) déformée du cordon de soudure ou d'estampage (22) est repliée.
